(19) Europäisches Patentamt
European Patent Office
Office européen des brevets

(11) **EP 4 708 423 A1**

(12) **EUROPEAN PATENT APPLICATION**

(43) Date of publication:
**11.03.2026 Bulletin 2026/11**

(21) Application number: **25198042.1**

(22) Date of filing: **26.08.2025**

(51) International Patent Classification (IPC):
**H01M 10/04** (2006.01)    **H01M 10/0587** (2010.01)
**H01M 50/107** (2021.01)    **H01M 50/538** (2021.01)

(52) Cooperative Patent Classification (CPC):
**H01M 10/0431; H01M 10/0587;** Y02E 60/10;
Y02P 70/50

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **03.09.2024 CN 202422164105 U**

(71) Applicant: **AESC Japan Ltd.**
**Yokohama-Shi, Kanagawa 220-0012 (JP)**

(72) Inventor: **JI, Peng**
**Jiangyin City, Wuxi City 214443 (CN)**

(74) Representative: **Becker, Eberhard**
**Becker Kurig & Partner**
**Patentanwälte mbB**
**Bavariastraße 7**
**80336 München (DE)**

(54) **SECONDARY BATTERY, BATTERY PACK AND ELECTRONIC DEVICE**

(57) A secondary battery (100) is provided, including an electrode assembly (120) which includes a negative pole sheet (11), a first separator (12), a positive pole sheet (13), and a second separator (14). The negative pole sheet (11) includes a negative coated area (211) and a negative tab (311) protruding from the negative coated area (211). The positive pole sheet (13) includes a positive coated area (213) and a positive tab (313) protruding from the positive coated area (213). A direction from the negative tab (311) to the positive tab (313) is a height direction (H). Along the height direction (H), an upper end of the negative coated area (211) overhangs an upper end of the positive coated area (213). Along a direction away from the height direction (H), a lower end of the negative coated area (211) overhangs a lower end of the positive coated area (213).

FIG. 5

## Description

BACKGROUND

Technical Field

The disclosure relates to a secondary battery, a battery pack, and an electronic device.

Description of Related Art

In a field of new energy power batteries, an application of secondary batteries is more and more extensive. For example, the secondary batteries (such as lithium-ion batteries) may be applied to electronic devices, such as vehicles, energy storage, mobile phones, tablet computers, wearable devices, mobile power supplies, electronic cigarettes, digital products, electric tools, power units, energy storage devices. The secondary battery includes a cylindrical battery, which includes a housing and an electrode assembly. The electrode assembly includes a positive pole sheet, a first separator, a negative pole sheet, and a second separator, which are stacked on each other in sequence and wound into the electrode assembly, and then packaged in the housing. However, the existing secondary batteries still need further improvement in some aspects.

SUMMARY

In view of the issues existing in the related art, an objective of the disclosure is to provide a secondary battery, a battery pack, and an electronic device, so as to at least improve height uniformity of an electrode assembly.

According to one aspect of the disclosure, a secondary battery is provided, including an electrode assembly. The electrode assembly includes: a negative pole sheet, a first separator, a positive pole sheet, and a second separator stacked and wound in sequence to form the electrode assembly. The negative pole sheet includes a negative coated area and a negative tab protruding from the negative coated area. The positive pole sheet includes a positive coated area and a positive tab protruding from the positive coated area. The negative tab and the positive tab are respectively located on two opposite sides of the electrode assembly, and a direction from the negative tab to the positive tab is a height direction of the electrode assembly. Along the height direction, a distance that an upper end of the negative coated area overhangs an upper end of the positive coated area is Lp mm, and a value range of Lp is 0.3 to 1.7. Along a direction away from the height direction, a distance that a lower end of the negative coated area overhangs a lower end of the positive coated area is Ln mm, and a value range of Ln is 0.8 to 2.2.

In the above technical solution, the upper end of the negative coated area overhangs the upper end of the positive coated area by Lp mm, and the value range of Lp is 0.3 to 1.7, while the lower end of the negative coated area overhangs the lower end of the positive coated area by Ln mm, and the value range of Ln is 0.8 to 2.2, which may at least improve the height uniformity of the entire electrode assembly.

In some embodiments, $1.3 \leq Ln/Lp \leq 1.7$ is satisfied. In first 20 winding turns in a winding direction from a start end of the positive pole sheet, a range of the Ln mm is A1 mm. In remaining turns from a start position of a $21^{st}$ turn of the positive pole sheet to a tail end of the positive pole sheet, a range of the Ln mm is A2 mm, and A1 is greater than A2.

In some embodiments, a value range of the A1 is 0.2 to 0.5, and a value range of the A2 is 0 to 0.2.

In some embodiments, in first 20 winding turns in a winding direction from a start end of the positive pole sheet, a range of the Lp mm is A3 mm. In remaining turns from a start position of a $21^{st}$ turn of the positive pole sheet to a tail end of the positive pole sheet, the range of the Lp mm is A4 mm, and A3 is greater than A4.

In some embodiments, a standard deviation of the Lp mm in the first 20 turns is S1 mm, and a value range of S1 is 0.09 to 0.15. The standard deviation of the Lp mm in the remaining turns is S2 mm, and a value range of S2 is 0.02 to 0.04.

In some embodiments, along the direction away from the height direction, a distance that a lower end of any one of the first separator and the second separator overhangs the lower end of the negative coated area is G1 mm. In first 20 winding turns in a winding direction from a start end of the positive pole sheet, a standard deviation of the G1 mm is S3 mm, and a value range of S3 is 0.09 to 0.15. In remaining turns from a start position of a $21^{st}$ turn of the positive pole sheet to a tail end of the positive pole sheet, the standard deviation of G1 mm is S4, and a value range of S4 is 0.08 to 0.14.

In some embodiments, the secondary battery is a cylindrical battery.

In some embodiments, the secondary battery further includes a housing, in which an opening is disposed at one end of the housing, and the housing is provided with a rolling groove protruding toward an inside of the housing; and a cover plate component, in which the cover plate component covers the opening of the housing.

The electrode assembly is accommodated in the housing, and the rolling groove limits movement of the electrode assembly in the height direction.

According to another aspect of the disclosure, a battery pack is further provided, including any one of the above secondary batteries.

According to another aspect of the disclosure, an electronic device is further provided, including any one of the above secondary batteries.

Beneficial technical effects of the disclosure are as follows.

In the above technical solution, the upper end of the negative coated area overhangs the upper end of the positive coated area by Lp mm, and the value range of Lp is 0.3 to 1.7, while the lower end of the negative coated area overhangs the lower end of the positive coated area by Ln mm, and the value range of Ln is 0.8 to 2.2, which may at least improve the height uniformity of the entire electrode assembly. High height uniformity means high uniformity of a capacity of a battery.

Further, compared to a square housing and a pouch cell, since the cylindrical battery strives for higher energy density, requirements of a process window for height uniformity of bare cells are higher, and a height space inside the housing for accommodating the bare cells is also very limited (so that each of the bare cells may be placed inside the housing). Therefore, the technical solution of the disclosure also improves the uniformity of the capacity of the cylindrical battery. In addition, if the height uniformity is poor, the taller electrode assembly may not be installed into the housing, affecting battery assembly. In the disclosure, a case where the taller electrode assembly may not be installed into the housing during assembly is avoided by improving the height uniformity of the electrode assembly, thereby preventing the height uniformity of the electrode assembly from affecting assembly of the cylindrical battery.

## BRIEF DESCRIPTION OF THE DRAWINGS

In order to more clearly describe the embodiments of the disclosure or the technical solutions in the related art, the drawings required for use in descriptions of the embodiments or the related art will be briefly introduced below. Obviously, the drawings in the following descriptions are some embodiments of the disclosure. For those skilled in the art, other embodiments may be obtained based on the drawings without creative work.

FIG. 1 is a schematic view of an electronic device in an embodiment of the disclosure being a vehicle.
FIG. 2 is a perspective view of a secondary battery according to an embodiment of the disclosure.
FIG. 3 is a cross-sectional view of a secondary battery according to an embodiment of the disclosure.
FIG. 4 is a schematic view of an electrode assembly of a secondary battery according to an embodiment of the disclosure.
FIG. 5 is a schematic exploded view of an electrode assembly before winding according to an embodiment of the disclosure.
FIG. 6 is a schematic cross-sectional view of an electrode assembly perpendicular to a height direction according to an embodiment of the disclosure.
FIG. 7 shows a relationship between a distance that a negative coated area overhangs a positive coated area and the number of winding turns, on a side of a negative tab after winding an electrode assembly in an embodiment of the disclosure.

## DETAILED DESCRIPTION OF DISCLOSED EMBODIMENTS

In order to better understand the spirit of the embodiments of the disclosure, some preferred embodiments of the disclosure are further described below.

The embodiments of the disclosure will be described in detail below. Throughout the specification of the disclosure, the same or similar components and components having the same or similar functions are denoted by similar reference numerals. The embodiments described herein with respect to the accompanying drawings are illustrative and diagrammatic, and are intended to provide a basic understanding of the disclosure. The embodiments of the disclosure should not be interpreted as limiting the disclosure.

As used herein, the terms "substantially", "roughly", "essentially", and "approximately" are used to describe and illustrate minor variations. When used in connection with an event or a circumstance, the terms may refer to examples where the event or the circumstance occurred exactly and examples where the event or the circumstance occurred very approximately.

In this specification, unless otherwise specified or limited, relative terms such as "central", "longitudinal", "lateral", "front", "rear", "right", "left", "inner", "outer", "lower", "higher", "horizontal", "vertical", "higher than", "lower than", "above", "below", "top", "bottom", and derivative terms thereof (e.g., "horizontally", "downwardly", "upwardly", etc.) should be interpreted as referring to directions described in the discussion or illustrated in the accompanying drawings. These relative terms are used only for convenience of description and do not require that the disclosure be constructed or operated in a specific direction.

For convenience of description, "first", "second", "third", etc. may be used herein to distinguish different components of one drawing or a series of drawings. "First", "second", "third", etc. are not intended to describe corresponding components.

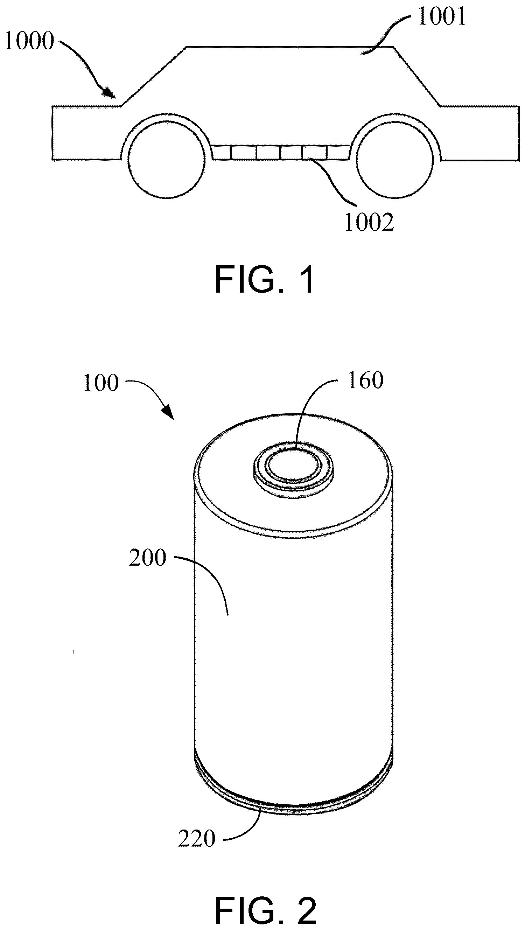

For convenience of description, the following embodiments are described by taking an electronic device as a vehicle 1000 as an example. The vehicle 1000 may be a fuel vehicle, a gas vehicle, or a new energy vehicle, and the new energy vehicle may be a battery electric vehicle, a hybrid electric vehicle, or an extended range electric vehicle, but the disclosure is not limited thereto. Referring to FIG. 1, a battery pack 1002 is disposed inside the vehicle 1000. The battery pack 1002 may be disposed at a bottom (as shown in FIG. 1), a head, a tail, or any other appropriate position of a vehicle body 1001. The battery pack 1002 may be used to power the vehicle 1000. For example, the battery pack 1002 may be used as an operating power source or a driving power source for the vehicle 1000. The battery pack 1002 may include multiple secondary batteries (such as a secondary battery 100 in FIG. 2) and a housing for accommodating the secondary batteries.

However, in some other embodiments, the electronic device may also be a mobile phone, a portable device, a notebook computer, a ship, a spacecraft, an electric toy, an electric tool, etc. The spacecraft includes an aircraft, a rocket, a space shuttle, a spaceship, etc. The electric toy includes a fixed or mobile electric toy, such as a game console, an electric car toy, an electric ship toy, an electric aircraft toy. The electric tool includes a metal cutting electric tool, a grinding electric tool, an assembly electric tool, and a railway electric tool, such as an electric drill, an electric grinder, an electric wrench, an electric screwdriver, an electric hammer, an electric impact drill, a concrete vibrator, an electric planer. The embodiment of the disclosure provides no special limitation to the electronic device. The electronic device may include a working portion. The working portion is a unit component that may obtain electrical energy of the battery pack 1002 and perform corresponding work, such as a blade rotating unit of a fan, a dust-absorbing working unit of a vacuum cleaner.

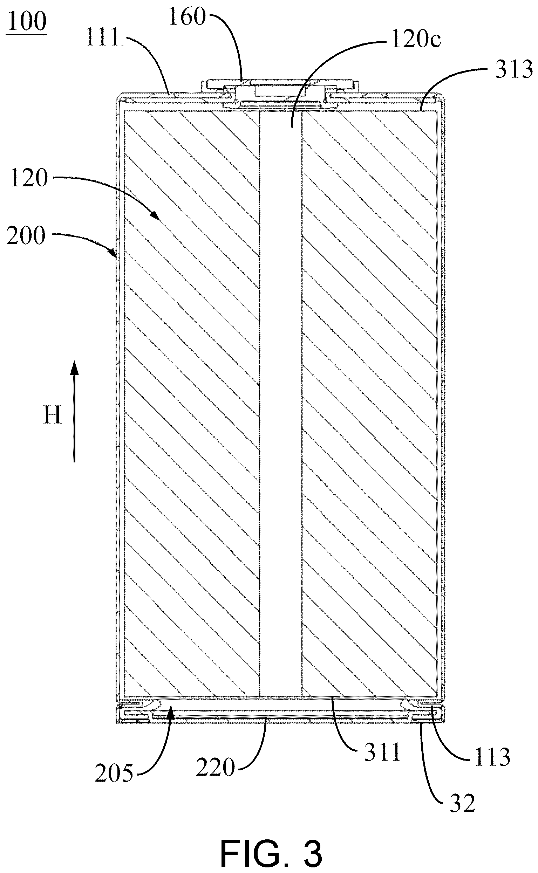

FIG. 2 is a perspective view of the secondary battery 100 according to an embodiment of the disclosure. FIG. 3 is a cross-sectional view of the secondary battery 100 according to an embodiment of the disclosure. In this embodiment, the secondary battery 100 may be a cylindrical battery.

In an example of the secondary battery of the disclosure, as shown in both FIGs. 2 and 3, the secondary battery 100 includes a housing 200. An opening 205 is disposed at one end of the housing 200. A cover plate component 220 covers the opening 205 of the housing 200 and blocks an accommodating cavity of the housing 200 to package an electrode assembly 120 and an electrolyte. A material of the housing 200 may be any of a variety of available materials, such as copper, iron, aluminum, steel, aluminum alloys. The housing 200 may be cylindrical and define the accommodating cavity, and the electrode assembly 120 is disposed in the accommodating cavity. A diameter of the housing 200 may be determined according to a specific diameter size of the electrode assembly 120, such as 18 mm, 21 mm, 46 mm. In some embodiments, the secondary battery 100 may be a 4680 cylindrical battery (46 mm in diameter and 80 mm in height), the secondary battery 100 may be a 4695 cylindrical battery (46 mm in diameter and 95 mm in height), or the secondary battery 100 may be a 46120 cylindrical battery (46 mm in diameter and 120 mm in height).

The electrode assembly 120 is mainly formed by stacking and winding a negative pole sheet, a first separator, a positive pole sheet, and a second separator in sequence. The electrode assembly 120 has a positive tab 313 and a negative tab 311 on opposite sides thereof. The negative tab 311 faces the opening 205, and the positive tab 313 faces an end wall 111 of the housing 200 opposite to the opening 205. A direction from the negative tab 311 to the positive tab 313 is a height direction H of the electrode assembly 120.

A rolling groove 113 protruding inwardly may be disposed on a side wall of the housing 200 adjacent to the opening 205. The electrode assembly 120 is disposed between the end wall 111 and the rolling groove 113, and the rolling groove 113 may limit movement of the electrode assembly 120 between the end wall 111 and the rolling groove 113 in the height direction H and an opposite direction thereof. An end portion of the housing 200 on a side of the opening 205 may be configured as a beading portion 32, and the beading portion 32 extends inwardly along a radial direction of the housing 20. The beading portion 32 and the rolling groove 113 are arranged at intervals along the height direction H, and the rolling groove 113 and the beading portion 32 may clamp the cover plate component 220 together.

The secondary battery 100 further includes a pole post 160 passing through the end wall 111. The pole post 160 may be electrically connected to the positive tab 313 of the electrode assembly 120 through a positive current collecting plate, so that the pole post 160 is positively charged. The negative tab 311 may be electrically connected to the housing 200 through a negative current collecting plate, so that the housing 200 is negatively charged.

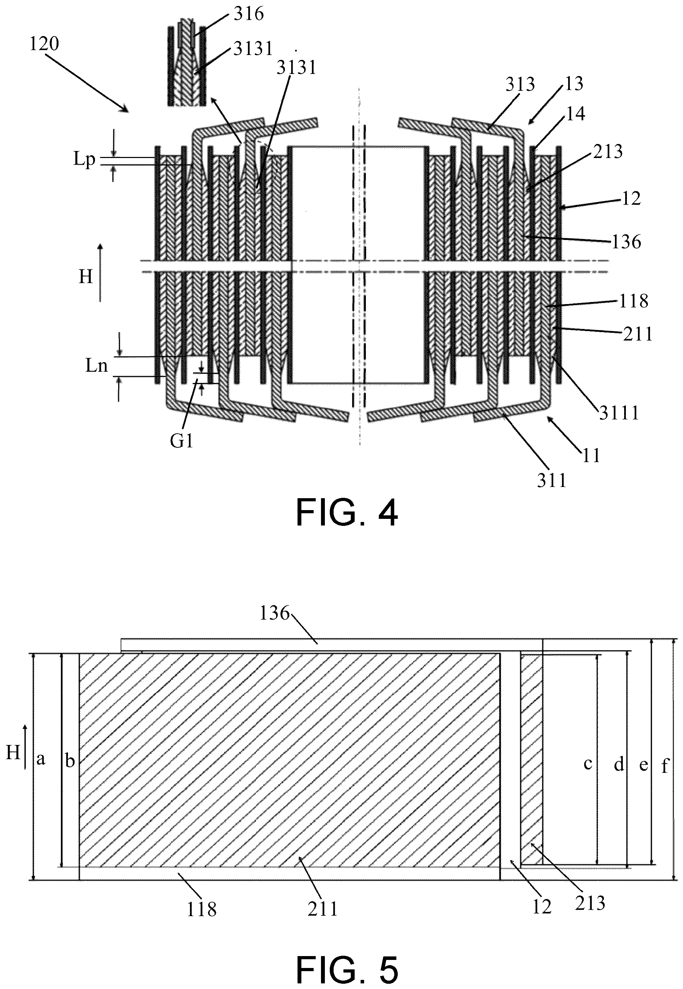

FIG. 4 is a schematic view of the electrode assembly 120 of the secondary battery 100 according to an embodiment of the disclosure. Referring to FIG. 4, the electrode assembly 120 is formed by stacking and winding a negative pole sheet 11, a first separator 12, a positive pole sheet 13, and a second separator 14 in sequence. The electrode assembly 120 formed by winding has a winding center hole 120c.

The positive pole sheet 13 may include a positive current collector 136 and a positive coated area 213. The positive coated area 213 is coated on a portion of a surface of the positive current collector 136. The positive coated area 213 is a positive active material layer formed by coating a positive active material. A portion of the positive current collector 136 not covered by the positive coated area 213 constitutes the positive tab 313. The negative pole sheet 11 may include a negative current collector 118 and a negative coated area 211. The negative coated area 211 is coated on a portion of a surface of the negative current collector 118. The negative coated area 211 is a negative active material layer formed by coating a negative active material. A portion of the negative current collector 118 not covered by the negative coated area 211 constitutes the negative tab 311.

Taking a lithium-ion battery as an example, a material of the positive current collector 136 may be aluminum. The positive coated area 213 may include the positive active material, and the positive active material may be lithium cobalt oxide, lithium iron phosphate, ternary lithium, lithium manganate, etc. A material of the negative current collector 118 may be copper. The negative coated area 211 may include the negative active material, and the negative active material may be carbon, silicon, etc. A material of the first separator 12 and the second separator 14 may be PP, PE, etc.

In an example of the secondary battery 100 of the disclosure, a manufacturing method of the secondary battery 100 in the disclosure includes the following steps.

Winding: The negative pole sheet 11, the first separator 12, the positive pole sheet 13, and the second separator 14 are stacked and wound to form a winding structure, and uncoated portions of the positive current collector 136 of the positive pole sheet 13 and the negative current collector 118 of the negative pole sheet 11 constitute the positive tab 313 and the negative tab 311. The positive tab 313 and the negative tab 311 are bent along a radial direction of the electrode assembly 120.

Welding the current collecting plates to the electrode assembly 120: Specifically, the positive current collecting plate and the negative current collecting plate are welded and connected to surface areas of the bent positive tab 313 and negative tab 311 respectively.

Inserting into the housing: The electrode assembly 120 welded to the positive current collecting plate and the negative current collecting plate is installed into the housing 200 from the opening 205. A method of installing the electrode assembly 120 in this step is not limited, which may, for example, be installed manually or by a robot arm.

The pole post 160 is installed.

Injecting the electrolyte: A method of injecting the electrolyte is not limited. The electrolyte may be injected from the opening 205, or an injection hole may be disposed on the end wall 1 1 1 to inject the electrolyte. Preferably, in this embodiment, the electrolyte is injected from the opening 205, which reduces a process of disposing the injection hole on the end wall 111. The existing opening 205 may be directly used for injection, which simplifies the process and reduces the cost.

Sealing: The cover plate component 220 is sealed and installed on the opening 205. There are many packaging methods, which are not limited thereto. In some embodiments, an outer periphery of the housing 200 is first rolled to form the rolling groove 113 that is recessed toward a center of the housing 200 to limit the movement of the electrode assembly 120 in the height direction H, and then pier sealing is performed on the cover plate component 220 by using a mechanical sealing process to form the beading portion 32, so that the cover plate component 220 is sealed and installed on the opening 205 of the housing 200. In this step, the process is mature, the cost is low, and the efficiency is high.

FIG. 5 is a schematic exploded view of the electrode assembly 120 before winding according to an embodiment of the disclosure. According to the embodiment of the disclosure, in a direction along the height direction H and away from the height direction H, an upper end and a lower end of the negative coated area 211 both overhang (OH) an upper end and a lower end of the positive coated area 213. Specifically, referring to both FIGs. 4 and 5, on one side of the positive tab 313, along the height direction H, a distance that the upper end of the negative coated area 211 overhangs the upper end of the positive coated area 213 is Lp mm. In some embodiments, a value range of Lp may be 0.3 to 1.7. On one side of the negative tab 311, along the direction away from the height direction H, a distance that the lower end of the negative coated area 211 of the negative pole sheet 11 overhangs the lower end of the positive coated area 213 of the positive pole sheet 13 is Ln mm.

On one side of the negative tab 311, the negative coated area 211 has a negative thinned area 3111 at one end in the direction away from the height direction H. If the negative thinned area 3111 overlaps the positive coated area 213 too much in the radial direction, it is easy to cause a cell balance (referred to as a CB value) to be less than 1.0, resulting in lithium plating during full charge. For example, the CB value may be equal to the ratio of the negative capacity to the positive capacity. On one side of the positive tab 313, the positive coated area 213 of the positive pole sheet 13 has a positive thinned area 3131 at one end in the height direction H, and the positive thinned area 3131 overlaps the negative coated area 211 in the radial direction. The cell balance is greater than a design value, and there will be no lithium plating during a charging process, which improves safety. It may be understood that, in order to prevent the lithium plating, it is feasible to design the upper and lower ends of the negative coated area 211 to respectively overhang the positive coated area 213.

In the above technical solution, the upper end of the negative coated area 211 overhangs the upper end of the positive coated area 213 by Lp mm, and the value range of Lp is 0.3 to 1.7, while the lower end of the negative coated area 211 overhangs the lower end of the positive coated area 213 by Ln mm, and a value range of Ln is 0.8 to 2.2, which at least enables height uniformity of the entire electrode assembly 120 to be better. High height uniformity means high uniformity of a battery capacity, so the technical solution of the disclosure also improves uniformity of a capacity of the cylindrical battery. On the other hand, for assembly of the current secondary battery, when it is necessary to select a housing of the same specification to accommodate multiple electrode assemblies, when the current electrode assemblies are wound, a height of each turn wound in the electrode assembly is uneven, the height uniformity of the electrode assemblies is poor, and the heights of the electrode assemblies generated are not uniform. That is, the height uniformity is poor. If the height uniformity of the electrode assemblies is poor, the taller electrode assembly may not be installed into the housing, affecting battery assembly. In the disclosure, a case where the taller electrode assembly may not be installed into the housing during assembly is avoided by improving the height uniformity of the electrode assembly, thereby preventing the height uniformity of the electrode assembly from affecting assembly of the cylindrical battery.

In other cases, the housing of the same specification may be adapted to the highest electrode assembly, while comparing a battery formed by assembling the lowest electrode assembly into the housing of the same specification with a battery formed by assembling the highest cell into the housing of the same specification, a space utilization rate of the lowest electrode assembly in the height direction after being adapted to the housing is compared with a space utilization rate of the highest electrode assembly in the height direction after being adapted to the above housing, and obviously, the former has lower energy density than the latter. For the electrode assembly 120 according to the embodiment of the disclosure, if the height uniformity of the single electrode assembly of a batch of electrode assemblies 120 is better, the heights of the electrode assemblies 120 generated in batches are more consistent compared to the heights of the current electrode assemblies generated in batches. Therefore, after the electrode assemblies 120 are assembled into the housing 200 that is adapted to the highest electrode assembly 120, the lower electrode assemblies 120 may also obtain higher energy density. Preferably, when the secondary battery 100 is a cylindrical battery, since the cylindrical battery strives for higher energy density, when the electrode assembly 120 in the embodiment of the disclosure is adapted to the cylindrical battery, for the electrode assembly 120 in the embodiment of the disclosure with good height uniformity and high space utilization rate in the height direction, when it is adapted to the cylindrical battery, the effect that may be obtained is better.

Further, it is obviously understandable that when assembling the electrode assemblies and the positive and negative current collecting plates in batches, the positive and negative current collecting plates are required to be welded to the electrode assemblies in a one-to-one correspondence. If the height uniformity of the batch of electrode assemblies is poor, welding positions of one group of positive and negative current collecting plates and electrode assembly will be less consistent than welding positions of another electrode assembly and another group of positive and negative current collecting plates during assembly in batches. However, if the electrode assemblies 120, as in the embodiments of the present application, have good consistency in height, the alignment of the welding positions between the positive and negative current collecting plates and the electrode assemblies 120 will be improved, allowing for better selection of the welding positions. That is, selection of the welding positions will be better.

In some embodiments, the above Ln and Lp satisfy: $1.3 \leq Ln/Lp \leq 1.7$. In other words, the distance Ln mm that the negative coated area 211 overhangs on one side of the negative tab 311 is 1.3 to 1.7 times the distance Lp mm that the negative coated area 211 overhangs on one side of the positive tab 313. In this embodiment, while it is controlled that there are Ln and Lp on the sides of the positive and negative tabs respectively to improve the safety, it may also meet requirements for the energy density and improve the energy density of the cell. In addition, for the cylindrical battery, the negative thinned area 3111 of the negative coated area 211 is disposed on one side of the negative tab 311, so the distance Ln mm that the negative coated area 211 overhangs on one side of the negative tab 311 is controlled to be greater, which may avoid the lithium plating.

In some embodiments, a tab adhesive 316 may be further disposed at a position of the positive tab 313 adjacent to the positive coated area 213 (specifically, an edge of the positive thinned area 3131). The tab adhesive 316 is an insulating material to provide insulation to avoid risks on a positive side. Main components of the tab adhesive 316 may be boehmite and PVDF (polyvinylidene fluoride). Therefore, through the above ratio of $1.3 \leq Ln/Lp \leq 1.7$, under a condition of the extreme energy density of the cylindrical battery, the energy density may be improved, and the safety may be guaranteed.

Referring to FIG. 5, in some embodiments, along the height direction H, a width of the negative coated area 211 is b mm, and a value range of b may be 110.5 to 111.5. A width of the positive coated area 213 is c mm, and a value range of c may be 108 to 109. In some embodiments, a width of the negative current collector 118 of the negative pole sheet 11 is a mm, and a value range of a may be 116.8 to 118.2. A width of the positive current collector 136 is e mm, and a value range of e may be 116.3 to 117.7. A width of the first separator 12 is d mm, and a value range of d may be 112 to 114. Preferably, the widths of the first separator 12 and the second separator 14 may be the same. In FIG. 5, a total width of a stacked layer formed by the stacked negative pole sheet 11, first separator 12, positive pole sheet 13, and second separator 14 is f mm, and a value range of f may be 124 to 126. For example, f may be 125.

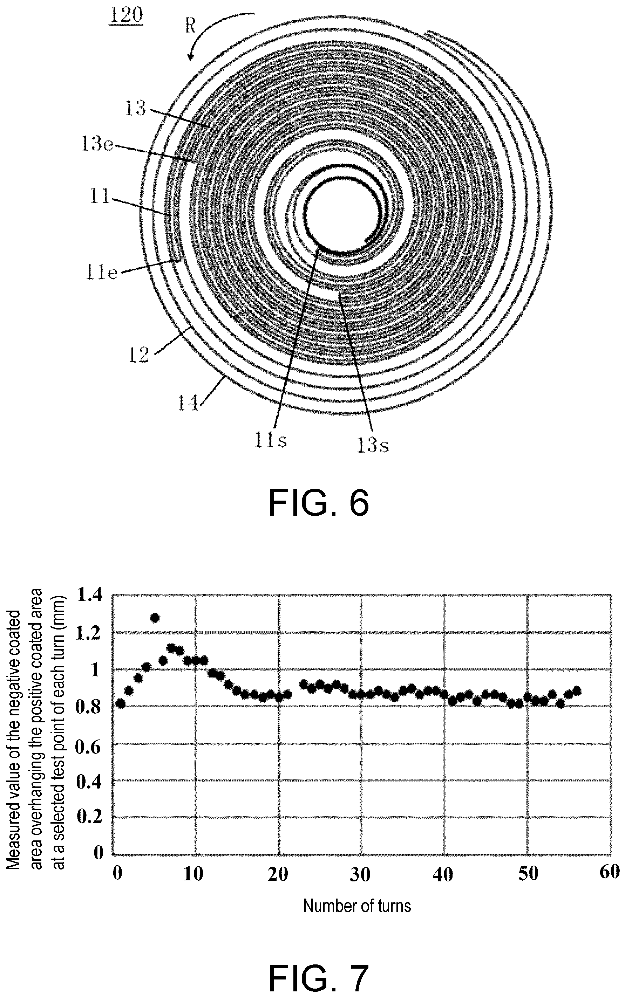

FIG. 6 is a schematic cross-sectional view of the electrode assembly 120 perpendicular to the height direction H according to an embodiment of the disclosure. In a winding direction R of the electrode assembly 120, a tail end 11e of the negative pole sheet 11 overhangs a tail end 13e of the positive pole sheet 13. In a direction opposite to the winding direction R, a start end 11s of the negative pole sheet 11 overhangs a start end 13s of the positive pole sheet 13. In this way, lithium ions separated from the positive coated area 213 of the positive pole sheet 13 may be smoothly embedded in the negative coated area 211 of the negative pole sheet 11, thereby avoiding the lithium plating. In addition, in the winding direction R and the opposite direction thereof, the first separator 12 and the second separator 14 both overhang the positive pole sheet 13 and the negative pole sheet 11 to play a role of electrical insulation. Therefore, it should be understood that the positive pole sheet 13 and the negative pole sheet 11 as well as the first separator 12 and the second separator 14 are all overlapped starting from the start end 13s of the positive pole sheet 13. In this specification, the start end 13s of the positive pole sheet 13 is used as a start position for counting the number of turns.

In some embodiments, in the winding direction R, in the first 20 winding turns starting from the start end 13s of the positive pole sheet 13, the above Ln mm has a range of A1 mm. That is, among the multiple Ln mm measured in the first 20 turns, a difference between a maximum value and a minimum value is A1 mm. In the remaining turns from a start position of the 21st turn of the positive pole sheet 13 to the tail end 13e of the positive pole sheet 13, the range of the above Ln mm is A2 mm. Usually, a value range of the number of remaining turns is 25 to 35. In some embodiments, A1 is greater than A2. That is, the range A1 of Ln of the first 20 turns is greater than the range A2 of Ln of the remaining turns.

Referring to FIG. 7, FIG. 7 shows a relationship between the distance Ln that the negative coated area 213 of the electrode assembly 120 overhangs the positive coated area 213 on the side of the negative tab 311 and the number of winding turns for the electrode assembly 120 according to an embodiment of the disclosure. Specifically, in FIG. 7, the X-coordinate represents the number of turns, and the Y-coordinate represents a measured value (in mm) of the negative coated area 211 overhanging the positive coated area 213 at a selected test point of each turn. In actual generation of the electrode assembly, the distance that the negative coated area overhangs the positive coated area is set as a theoretical value. However, in a winding process of the electrode assembly, there may be a deviation between the actual distance that the negative coated area overhangs the positive coated area and the theoretical value. It may be seen from FIG. 7 that in the first 20 turns, fluctuation of Ln is greater, and the range A1 is also greater. The range A1 is greater than the range A2 of Ln in the remaining turns (all turns after the 20th turn). In other words, the range of Ln of the outer circle of electrode assembly 120 is less than the range of Ln of the inner circle. By winding position adjustment (also referred to as winding deviation correction), the range A2 of Ln of the outer circle may be controlled to be less than the range A1 of Ln of the inner circle, so that Ln of the outer circle has a smaller range, the electrode assembly may have good height uniformity, and the battery is safer.

In some embodiments, a value range of the range A1 of Ln in the first 20 turns may be 0.2 to 0.5. In some embodiments, a value range of the range A2 of Ln in the remaining circles may be 0 to 0.2. Such a value range may effectively improve the high uniformity of the electrode assemblies 120, and is achievable and controllable under existing process conditions.

Similar to Ln, in the first 20 circles, the range of the above Lp mm is A3 mm, and in the remaining circles, the range of Lp mm is A4 mm, where A3 may be greater than A4. That is, the range of Lp of the outer circle of electrode assembly 120 is less than the range of Lp of the inner circle. By winding position adjustment (also referred to as winding deviation correction), the range A4 of Lp of the outer circle may be controlled to be less than the range A3 of Lp of the inner circle, so that Lp of the outer circle has a smaller range, the electrode assembly may have good height uniformity, and the battery is safer.

The width of the negative coated area 211 overhanging the positive coated area 213 along the height orientation H is Lp mm. Further, in some embodiments, in the first 20 circles, a standard deviation of Lp mm is S1 mm, and a value range of S1 may be 0.09 to 0.15. In the remaining circles, the standard deviation of Lp mm is S2 mm, and a value range of S2 may be 0.02 to 0.04.

The standard deviations S1 and S2 of the above Lp may be tested through the following method. Several test points are selected in the electrode assembly, Lp at these test points is measured, and then calculation is performed according to a standard deviation formula. The standard deviation formula is as follows.

$$S = \sqrt{\frac{\sum_{i=1}^{n}(x_i - \overline{x})^2}{n-1}}$$

S represents a standard deviation, $\overline{x}$ represents an arithmetic mean of measurement values of Lp of each of the test points, $\overline{x}_i$ represents the measurement value of Lp of the i-th test point, and n represents the number of test points. For example, multiple test points are selected in the remaining circles, the values of Lp at these test points are measured, and the standard deviation of Lp is calculated by using the above formula to obtain S2. By controlling the standard deviations S1 and S2 of Lp of the first 20 circles and the remaining circles to have the above value range, the electrode assembly may have better height uniformity.

Referring to FIG. 4, on one side of the negative tab 311, along the direction away from the height direction H, a lower end of the first separator 12 or the second separator 14 may overhang the lower end of the negative coated region 211, and an overhanging distance is G1 mm. In some embodiments, a value range of G1 may be 0.9 to 1.4. In some embodiments, a standard deviation of G1 mm in the first 20 circles is S3 mm, and a value range of S3 may be 0.09 to 0.15. The standard deviation of G1 in the remaining circles is S4 mm, and a value range of S4 may be 0.08 to 0.14. The standard deviations S3 and S4 of G1 are calculated by using the above standard deviation formula. By controlling the standard deviations S3 and S4 of G1 of the first separator 12 and/or the second separator 14 to have the above value ranges, the electrode assembly may have better height uniformity. Further, compared to a square housing and a pouch cell, since the cylindrical battery strives for higher energy density, requirements of a process window for height uniformity of bare cells are higher, and a height space inside the housing for accommodating the bare cells is also very limited (so that each of the bare cells may be placed inside the housing). Therefore, the technical solution of the disclosure also improves the uniformity of the capacity of the cylindrical battery.

In the embodiments of the disclosure, a battery pack is further provided, including any one of the secondary batteries 100 described above, and the battery pack may have beneficial effects described above with respect to the secondary battery 100. In the embodiment of the disclosure, an electronic device is further provided, including any of the secondary batteries 100 described above, and the electronic device may have the beneficial effects described above with respect to the secondary battery 100.

**Claims**

1. A secondary battery (100), comprising an electrode assembly (120), wherein the electrode assembly (120) comprises: a negative pole sheet (11), a first separator (12), a positive pole sheet (13), and a second separator (14) stacked and wound in sequence to form the electrode assembly (120),

   the negative pole sheet (11) comprises a negative coated area (211) and a negative tab (311) protruding from the negative coated area (211), the positive pole sheet (13) comprises a positive coated area (213) and a positive tab (313) protruding from the positive coated area (213), the negative tab (311) and the positive tab (313) are respectively located on two opposite sides of the electrode assembly (120), and a direction from the negative tab (311) to the positive tab (313) is a height direction (H) of the electrode assembly (120),
   along the height direction (H), a distance that an upper end of the negative coated area (211) overhangs an upper end of the positive coated area (213) is Lp mm, and a value range of Lp is 0.3 to 1.7,
   along a direction away from the height direction (H), a distance that a lower end of the negative coated area (211) overhangs a lower end of the positive coated area (213) is Ln mm, and a value range of Ln is 0.8 to 2.2.

2. The secondary battery (100) according to claim 1, wherein
   $1.3 \leq Ln/Lp \leq 1.7$ is satisfied,

   in first 20 winding turns in a winding direction (R) from a start end (13s) of the positive pole sheet (13), a range of the Ln mm is A1 mm,
   in remaining turns from a start position of a 21$^{st}$ turn of the positive pole sheet (13) to a tail end (13e) of the positive pole sheet (13), a range of the Ln mm is A2 mm, and A1 is greater than A2.

3. The secondary battery (100) according to claim 2, wherein a value range of the A1 is 0.2 to 0.5, and a value range of the A2 is 0 to 0.2.

4. The secondary battery (100) according to claim 1, wherein

   in first 20 winding turns in a winding direction (R) from a start end (13s) of the positive pole sheet (13), a range of the Lp mm is A3 mm,
   in remaining turns from a start position of a 21$^{st}$ turn of the positive pole sheet (13) to a tail end (13e) of the positive pole sheet (13), the range of the Lp mm is A4 mm, and A3 is greater than A4.

5. The secondary battery (100) according to claim 4, wherein

   a standard deviation of the Lp mm in the first 20 turns is S1 mm, and a value range of S1 is 0.09 to 0.15,
   the standard deviation of the Lp mm in the remaining turns is S2 mm, and a value range of S2 is 0.02 to 0.04.

6. The secondary battery (100) according to claim 1, wherein

   along the direction away from the height direction (H), a distance that a lower end of any one of the first separator (12) and the second separator (14) overhangs the lower end of the negative coated area (211) is G1 mm,
   in first 20 winding turns in a winding direction (R) from a start end (13s) of the positive pole sheet (13), a standard deviation of the G1 mm is S3 mm, and a value range of S3 is 0.09 to 0.15,
   in remaining turns from a start position of a 21$^{st}$ turn of the positive pole sheet (13) to a tail end (13e) of the positive pole sheet (13), the standard deviation of G1 mm is S4, and a value range of S4 is 0.08 to 0.14.

7. The secondary battery (100) according to claim 1, wherein
   the secondary battery (100) is a cylindrical battery.

8. The secondary battery (100) according to claim 1, further comprising:

   a housing (200), wherein an opening (205) is disposed at one end of the housing (200), and the housing (200) is provided with a rolling groove (113) protruding toward an inside of the housing (200); and
   a cover plate component (220), wherein the cover plate component (220) covers the opening (205) of the housing (200),
   wherein the electrode assembly (120) is accommodated in the housing (200), and the rolling groove (113) limits movement of the electrode assembly (120) in the height direction (H).

9. A battery pack (1002), comprising the secondary battery (100) according to any one of claims 1-8.

10. An electronic device, comprising the secondary battery (100) according to any one of claims 1-8.

1000

1001

1002

FIG. 1

100

160

200

220

FIG. 2

FIG. 3

FIG. 4

FIG. 5

FIG. 6

Number of turns

FIG. 7

Europäisches
Patentamt
European
Patent Office
Office européen
des brevets

# EUROPEAN SEARCH REPORT

**Application Number**

EP 25 19 8042

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/100438 A1 (FASCHING RAINER J [US] ET AL) 26 April 2012 (2012-04-26)<br>* paragraph [0002] *<br>* paragraph [0072] - paragraph [0076] *<br>* paragraph [0088] *<br>* paragraph [0090] *<br>* figures 4,5,9 *<br>----- | 1-10 | INV.<br>H01M10/04<br>H01M10/0587<br>H01M50/107<br>H01M50/538 |
| X | US 2016/380299 A1 (UMEYAMA HIROYA [JP] ET AL) 29 December 2016 (2016-12-29)<br>* paragraph [0047] - paragraph [0049] *<br>* paragraph [0051] *<br>* paragraph [0054] - paragraph [0056] *<br>* paragraph [0091] *<br>* paragraph [0094] *<br>* figures 4,7,8 *<br>----- | 1-10 | |
| X | WO 2016/034936 A1 (TOYOTA MOTOR CO LTD [JP]) 10 March 2016 (2016-03-10)<br>* paragraph [0043] - paragraph [0047] *<br>* paragraph [0064] *<br>* figures 2,3 *<br>----- | 1-10 | |

**TECHNICAL FIELDS SEARCHED (IPC)**

H01M

The present search report has been drawn up for all claims

| Place of search | Date of completion of the search | Examiner |
|---|---|---|
| The Hague | 29 January 2026 | Wentzel, Jürgen |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
........................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 19 8042

This annex lists the patent family members relating to the patent documents cited in the above-mentioned European search report.
The members are as contained in the European Patent Office EDP file on
The European Patent Office is in no way liable for these particulars which are merely given for the purpose of information.

29-01-2026

| Patent document cited in search report | Publication date | Patent family member(s) | | Publication date |
|---|---|---|---|---|
| US 2012100438 A1 | 26-04-2012 | CN | 103238238 A | 07-08-2013 |
| | | EP | 2630684 A2 | 28-08-2013 |
| | | JP | 6185841 B2 | 23-08-2017 |
| | | JP | 6552122 B2 | 31-07-2019 |
| | | JP | 2013545228 A | 19-12-2013 |
| | | JP | 2018026342 A | 15-02-2018 |
| | | KR | 20140001905 A | 07-01-2014 |
| | | KR | 20180054889 A | 24-05-2018 |
| | | TW | 201225389 A | 16-06-2012 |
| | | US | 2012100438 A1 | 26-04-2012 |
| | | US | 2016064725 A1 | 03-03-2016 |
| | | US | 2017338464 A1 | 23-11-2017 |
| | | WO | 2012054766 A2 | 26-04-2012 |
| US 2016380299 A1 | 29-12-2016 | CN | 106299444 A | 04-01-2017 |
| | | DE | 102016111020 A1 | 29-12-2016 |
| | | JP | 6202347 B2 | 27-09-2017 |
| | | JP | 2017010878 A | 12-01-2017 |
| | | KR | 20170001604 A | 04-01-2017 |
| | | US | 2016380299 A1 | 29-12-2016 |
| WO 2016034936 A1 | 10-03-2016 | CN | 106605319 A | 26-04-2017 |
| | | DE | 112015004043 T5 | 13-07-2017 |
| | | JP | 6361920 B2 | 25-07-2018 |
| | | JP | 2016058153 A | 21-04-2016 |
| | | KR | 20170033441 A | 24-03-2017 |
| | | US | 2017256822 A1 | 07-09-2017 |
| | | WO | 2016034936 A1 | 10-03-2016 |

EPO FORM P0459

For more details about this annex : see Official Journal of the European Patent Office, No. 12/82